Europäisches Patentamt

European Patent Office (11) Numéro de publication: **0 243 224**

Office européen des brevets **B1**

(12) **FASCICULE DE BREVET EUROPEEN**

(45) Date de publication du fascicule du brevet:       (51) Int. Cl.⁴: **F16L 33/02**
06.12.89

(21) Numéro de dépôt: 87400661.2

(22) Date de dépôt: 25.03.87

(54) **Collier de serrage.**

(30) Priorité: **27.03.86 FR 8604476**

(43) Date de publication de la demande:
**28.10.87 Bulletin 87/44**

(45) Mention de la délivrance du brevet:
**06.12.89 Bulletin 89/49**

(84) Etats contractants désignés:
**AT BE CH DE ES GB IT LI LU NL SE**

(56) Documents cités:
**EP-A- 0 079 252**
**GB-A- 2 131 478**
**GB-A- 2 161 207**

(73) Titulaire: **Etablissements CAILLAU, 28, rue Ernest Renan, F-92130 Issy-les-Moulineaux(FR)**

(72) Inventeur: **Calmettes, Lionel, Allée des Prés du Bourg Cidex 1648 - No. 6, F-41200 Romorantin(FR)**
Inventeur: **Michel, André, 140, rue du 8-Mai, F-41200 Romorantin(FR)**

(74) Mandataire: **Descourtieux, Philippe et al, CABINET BEAU de LOMENIE 55 rue d'Amsterdam, F-75008 Paris(FR)**

## Description

On connaît déjà, notamment par le brevet européen 3192 un collier de serrage, notamment pour tuyau souple , par exemple en caoutchouc ou en matière plastique, destiné à être raccordé de façon étanche à un tube rigide sur lequel il est emmanché. Un tel collier est généralement constitué par une bande de métal enroulée sur elle-même, comportant à chacune de ses extrémités des moyens complémentaires de serrage et/ou d'accrochage. L'une des extrémités, dite intérieure, de la bande, présente un prolongement qui s'étend au-delà du moyen de serrage correspondant, sous l'autre extrémité, dite extérieure, de la bande. Ce prolongement, quelquefois appelé bavette, permet de rétablir la continuité de la périphérie interne du collier dans la zone de serrage et/ou d'accrochage et d'éviter ainsi des défauts d'étanchéité du raccordement du tuyau souple sur le tube rigide.

On s'est toutefois rendu compte que, dans certains cas, un défaut d'étanchéité se produit en raison de la présence d'un épaulement constitué, sur la périphérie interne du collier, par le bord transversal de l'extrémité libre de la bavette.

Diverses solutions ont déjà été proposées, notamment par les brevets américains 1.467.708 ou 1.746.033 et, plus récemment, par le brevet français 2.456.279, pour éliminer l'inconvénient qui vient d'être évoqué.

Outre le fait que ces solutions conduisent à des difficultés de fabrication et sont, par conséquent, relativement onéreuses, elles ne donnent pas toujours satisfaction, notamment en ce qui concerne la facilité de montage exigée pour ce genre de collier, par exemple dans la construction automobile.

La présente invention a pour objet d'apporter une solution simple, économique et sûre au problème que pose l'épaulement du bord transversal de l'extrémité libre de la bavette, tel qu'il a été défini plus haut.

A cet effet, l'invention propose un collier du type ci-dessus décrit dans lequel le bord transversal de l'extrémité libre du prolongement ou bavette présente un profil rentrant dans la bande, par exemple en Ω ou analogue. D'autre part, au voisinage de son extrémité extérieure et en deçà du moyen de serrage et/ou d'accrochage correspondant, la bande présente un bossage allongé faisant saillie sur sa face interne. Du côté de l'extrémité extérieure de la bande, ce bossage possède sa hauteur maximale, sensiblement égale à l'épaisseur de la bande, mais cette hauteur décroit régulièrement jusqu'à s'annuler au fur et à mesure que le bossage s'étend dans la direction opposée à ladite extrémité extérieure de la bande. De préférence, ce bossage s'étend longitudinalement, sensiblement dans l'axe de la bande et est susceptible de pénétrer, au moins en partie, dans le profil rentrant de l'extrémité libre du prolongement.

Grâce à ces dispositions, il n'existe plus aucun épaulement, au moins sur une partie notable de la largeur de la bande, dans la région de l'extrémité libre de la bavette, de sorte que les risques de fuite que l'on constatait jusqu'à présent sont totalement éliminés.

L'invention sera mieux comprise et diverses caractéristiques secondaires, ainsi que ses avantages, apparaîtront au cours de la descripton qui va suivre, et d'un mode de réalisation avantageux, donné uniquement à titre d'exemple A cet effet, on se référera au dessin annexé dans lequel :

- la figure 1 est une vue en perspective d'un collier selon l'invention, dans sa position ouverte
- la figure 2 est une vue en coupe du collier selon la figure 1, monté et serré sur un tuyau souple
- la figure 3 est une vue suivant la flèche F de la figure 2, le tuyau étant supposé enlevé
- les figures 4, 5 et 6 sont des coupes selon IV-IV, V-V et VI-VI de la figure 3

Si l'on se reporte au dessin, on voit un collier de serrage constitué essentiellement par une bande métallique 1 enroulée sur elle-même. L'une de ses extrémités est conformée selon un crochet 2 tandis que l'autre présente une oreille 3, dirigée vers l'extérieur. Au-delà de cette oreille 3, un prolongement 4 de la bande s'étend sur une certaine distance, au moins égale et de préférence sensiblement supérieure à la longueur du crochet 2. Le prolongement 4 constitue une bavette qui sera située sous l'extrémité portant le crochet 2 lorsque le collier sera fermé. C'est pourquoi l'extrémité de la bande portant le crochet 2 sera dans ce qui suit dénommée extrémité extérieure, tandis que celle portant l'oreille 3 et le prolongement 4 est appelée extrémité intérieure.

Un collier de ce type a déjà été décrit dans le brevet européen 3192 et on n'en reprendra pas ici les caractéristiques avantageuses. On indiquera seulement que le perfectionnement qui va être décrit maintenant est applicable, non seulement au collier selon le brevet européen 3192, mais également aux colliers du même genre comportant à la fois des moyens complémentaires de serrage et/ou d'accrochage disposés aux deux extrémités de la bande et une bavette ou prolongement situé sur l'extrémité intérieure de celle-ci. En général, le bord transversal de l'extrémité libre du prolongement est rectiligne, comme cela est décrit dans le brevet européen précité, et on a exposé plus haut les inconvénients de cette disposition.

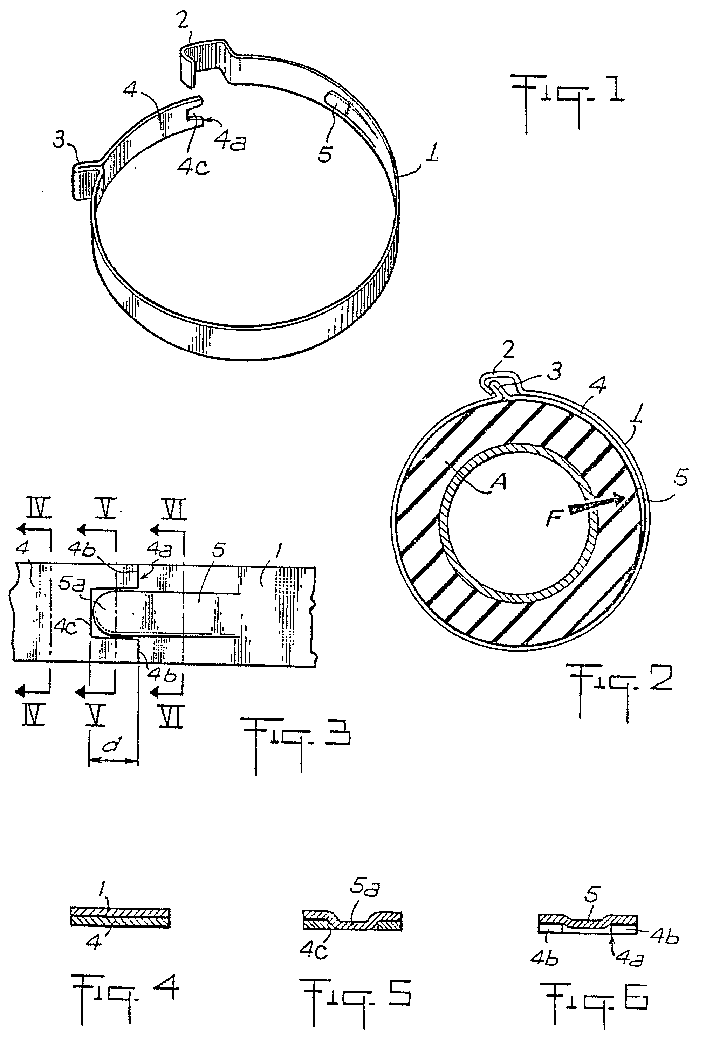

Dans le cas du collier représenté au dessin, le bord transversal 4a de l'extrémité libre de la bavette 4 présente un profil rectiligne 4b au voisinage des deux bords longitudinaux de la bande et une portion centrale rentrante 4c (figure 3). Le bord 4a évoque ainsi un profil en Ω qui peut être facilement obtenu par un découpage approprié de l'extrémité de la bande au moment de la fabrication.

D'autre part, un bossage allongé 5 est ménagé sur l'extrémité extérieure de la bande et fait saillie sur la face interne de celle-ci, ainsi qu'on le voit bien sur la figure 1 et sur la figure 2. Ce bossage est, de préférence et comme représenté au dessin, disposé dans l'axe de la bande et sa dimension transversale est inférieure à la largeur de la bande. Plus précisément, il présente, au moins dans la région 5a située du côté de l'extrémité extérieure, une forme complémentaire de celle de la partie rentrante 4c du bord transversal 4a de la bavette 4.

Dans la région 5a, la hauteur du bossage 5 vers l'intérieur du collier est maximale et sensiblement égale à l'épaisseur de la bande 1. Au contraire, à partir de cette région 5a et en s'éloignant de l'extrémité extérieure de la bande, la hauteur du bossage 5 diminue jusqu'à s'annuler.

Ainsi qu'on le sait, le serrage et la fixation du collier sur un tuyau souple A sont obtenus en rapprochant les deux extrémités de la bande jusqu'à ce que l'oreille 3 vienne en prise avec l'extrémité libre du crochet 2, comme on le voit sur la figure 2.

De ce fait, la bavette 4 glisse sous l'extrémité extérieure de la bande et le bossage 5 doit être placé sur la bande à une distance de son extrémité extérieure telle que le profil du bord transversal 4a de la bavette vienne entourer la région terminale 5a du bossage. Dans ces conditions, la zone centrale de la périphérie interne de la bande ne présente plus aucun épaulement mais, au contraire, une continuité parfaite dont on se rend compte à l'examen des figures 4 à 6. Plus précisément, sur la distance périphérique d (fig. 3), la conitnuité transversale de la bande est rétablie par l'engagement de la région 5a du bossage dans le profil rentrant 4c, cependant qu'au-delà des épaulements constitués par les parties rectilignes 4b, la continuité de la zone centrale de la bande est obtenue par la hauteur décroissante du bossage 5. Ainsi, comme on le voit sur la figure 2, le tuyau souple A est convenablement serré sur toute sa périphérie sans aucune discontinuité et l'étanchéité du raccordement est parfaite.

Il va de soi que diverses variantes peuvent être apportées à la réalisation qui vient d'être décrite en détail. En particulier, la bavette 4 et l'extrémité extérieure de la bande peuvent présenter des moyens permettant une fermeture amovible du collier avant son serrage. De même, l'extrémité extérieure peut comporter des moyens propres à assurer au collier, à la fois une certaine réserve d'élasticité et une limitation de l'effort de serrage du tuyau.

Si l'une et/ou l'autre de ces dispositions complémentaires sont prévues sur un collier selon l'invention, la bavette 4 sera relativement longue, cependant que le bossage 5 sera situé après les moyens complémentaires à partir de l'extrémité extérieure de la bande.

## Revendications

1. Collier de serrage constitué par une bande de métal (1) enroulée sur elle-même, comportant, à chacune de ses extrémités, des moyens complémentaires (2–3) de serrage et/ou d'accrochage, cependant que l'une des extrémités, dite intérieure, de la bande, présente un prolongement (4) s'étendant au-delà du moyen d'accrochage correspondant, sous l'autre extrémité, dite extérieure, de la bande, caractérisé en ce que le bord transversal (4a) de la bande constituant l'extrémité libre du prolongement (4) présente un profil rentrant (4c) dans la bande, par exemple en Ω ou analogue, cependant qu'au voisinage de son extrémité extérieure et en-deçà du moyen de serrage et/ou d'accrochage correspondant la bande présente un bossage (5) allongé faisant saillie sur sa face interne et que ledit bossage, susceptible de pénétrer dans le profil rentrant de l'extrémité libre du prolongement, possède, du côté de l'extrémité extérieure de la bande, sa hauteur maximale, sensiblement égale à l'épaisseur de la bande (1) et que sa hauteur décroit régulièrement jusqu'à s'annuler au fur et à mesure que le bossage s'étend dans la direction opposée à l'extrémité extérieure de la bande.

2. Collier selon la revendication 1, caractérisé en ce que le bossage (5) s'étend longitudinal, sensiblement dans l'axe de la bande (1).

## Patentansprüche

1. Klemmband, bestehend aus einem eingerollten Metallband (1), welches an jedem seiner Enden komplementäre Mittel (2–3) zum Klemmen und/oder zum Verhaken umfaßt, wobei eines der Enden des Bandes, genannt das innere Ende, eine Verlängerung (4) aufweist, die sich über das zugehörige Verhakungsmittel hinaus unter das andere Ende des Bandes, genannt das äußere Ende, erstreckt, dadurch gekennzeichnet, daß der Querrand (4a) des Bandes, der das freie Ende der Verlängerung (4) bildet, ein in das Band einspringendes Profil (4c), z.B. in Ω- oder ähnlicher Form, aufweist, wogegen das Band nahe seinem äußeren Ende und diesseits des zugehörigen Klemm- und/oder Verhakungsmittels eine längliche Erhebung (5) aufweist, die an seiner Innenfläche absteht, und daß die Erhebung, die in das einspringende Profil des freien Endes der Verlängerung eindringen kann, auf der Seite des äußeren Endes des Bandes ihre maximale Höhe hat, die im wesentlichen gleich der Dicke des Bandes (1) ist, und daß ihre Höhe gleichmäßig gegen Null in die dem äußeren Ende des Bandes entgegengesetzte Richtung abnimmt.

2. Band nach Anspruch 1, dadurch gekennzeichnet, daß sich die Erhebung (5) der Länge nach, im wesentlichen in der Achse des Bandes (1), erstreckt.

## Claims

1. Clamp constituted by a band of metal (1) wound over itself, comprising at each one of its ends, complementary tightening and/or fastening means (2–3), whereas one of the ends, called inner end, of the band, comprises an extending portion (4) which extends beyond the corresponding fastening means, under the other end, called outer end, of the band, characterized in that the transversal edge (4a) of the band constituting the free end of the extension (4) has a profile indented (4c) into the band, for example in Ω or the like, whereas close to its outer end and on this side of the corresponding tightening and/or fastening means, the band comprises an elongated boss (5) which projects from its inner face, and in that said boss, which is adapted to penetrate into the indented profile of the free end of the extension, has its maximum height on the side of the outer end of the band, and said maximum height being substantially equal to the thickness of the band (1) and reduces gradually to zero as the boss extends in the direction opposite the outer end of the band.

2. Clamp according to claim 1, characterized in that the boss (5) extends substantially along the axis of the band (1).

Fig. 1

Fig. 2

Fig. 3

Fig. 4

Fig. 5

Fig. 6